# EUROPEAN PATENT SPECIFICATION

(11) **EP 2 621 982 B1**
(45) Date of publication and mention of the grant of the patent: **30.07.2014**
(21) Application number: 11764425.2
(22) Date of filing: 21.09.2011
(51) Int. Cl.: C08G 18/22, C08G 18/24, C08G 18/42, C08G 18/79, C09D 175/06, C08K 5/06, C08K 5/1565, C08K 5/1575

(54) **TWO-COMPONENT COATING COMPOSITIONS**
ZWEIKOMPONENTEN-BESCHICHTUNGSZUSAMMENSETZUNGEN
COMPOSITION D'ENDUCTION À DEUX COMPOSANTS

(30) Priority: 01.10.2010 US 388794 P
(43) Date of publication of application: 07.08.2013
(73) Proprietor: Coatings Foreign IP Co. LLC, Wilmington, DE 19801 (US)
(72) Inventor: HUYBRECHTS, Jozef, B-2300 Turnhout (BE)
(74) Representative: Maiwald Patentanwalts GmbH
(86) International application number: PCT/US2011/052587
(87) International publication number: WO 2012/044509

(56) References cited:
- WO-A1-96/30433
- WO-A1-2008/073267
- US-B1- 6 472 493

## Description

### FIELD OF INVENTION

The invention relates to two-component coating compositions which contain cross-linkable binders, cross-linking agents, a catalyst for the curing reaction and a pot life extender.

### BACKGROUND OF INVENTION

The use of two-component coating compositions based on a polyisocyanate cross-linking agent and a binder component with functional groups containing active hydrogen is widespread in industrial and vehicle coating, in particular also in vehicle repair coating, due to the very good technological properties of these coating compositions. The coating compositions are here used both in water-based and in solvent-based form.

In particular for use in vehicle repair coating, a short drying time of the coating at moderate temperatures, for example from room temperature up to approx. 60°C, is desired. Drying or curing time may be markedly reduced by using catalysts for the cross-linking reaction. However, using catalysts also simultaneously leads to a reduction in pot life, i.e. a reduction in the time within which the coating composition can still satisfactorily be processed and/or applied.

Various approaches are already known to achieve an extended pot life. It is known, for example, to use several types of latent catalysts. In the coating composition mix in the pot, the latent catalyst is inactive or not fully active and is only activated by irradiation with high-energy radiation, by heat or moisture during the film-formation process. A potential disadvantage of coating compositions with latent catalysts is that the activation of the latent catalyst may not be fully controlled or may be to slow.

Furthermore, it is also known to use pot life extenders. For example, US 6472493 discloses two-component coating compositions based on hydroxyl functional binders, polyisocyanate hardeners and a catalyst system containing a metal catalyst, a tertiary amine and an organic acid. The organic acid is included to increase the pot life of the coating composition.

US 2007/0117888 discloses an additive system for increasing the pot life of two-component polyurethane coating compositions. The additive system is based on a cobalt or manganese metal catalyst and an organic chelating agent, preferably 1,10-phenanthroline or 2,2-dipyridil. Also, it is known to use 2,4-pentanedione as pot life extender in hydroxyl/isocyanate systems catalyzed by non-tin catalysts (WJ Blank, ZA He, ET Hessel; Progress in Organic Coatings, 1999 - Elsevier).

Because organic acids like carboxylic acids and di-ketones like 2,4-pentanedione are acidic, those pot life extenders have the disadvantage of causing corrosion to the cans in which the coating compositions are stored as well as developing color when used in combination with certain binders and co-catalysts.

In addition WO 96/30433 discloses non-aqueous formulations comprising resins with a higher solids content and a solvent which is a di-ether of the general formula R-O-R1-O-R2, wherein each of R, R1 and R2 is an aliphatic hydrocarbyl group with 1 to 5 carbon atoms in which R and R2 are the same or different alkyl groups and wherein R1 is an alkylene group. Those di-ethers have a lower toxicity than conventional solvents and their use as a solvent allows preparation of formulations containing 50-80 % by weight of non-volatile matter.

There is accordingly still a requirement for two-component coating compositions, based on a binder component with functional groups containing active hydrogen and polyisocyanate cross-linking agents, which combine an adequate working time (pot life) with acceptable drying even at moderate temperatures of, for example, room temperature to 60°C and which do not show the disadvantages of known pot life extenders. The coating compositions should here yield coatings with very good technological properties, such as, for example, very good hardness and resistance to chemicals and water, and excellent optical appearance, in particular no discoloration of the composition and high gloss of the coated surface.

### SUMMARY OF THE INVENTION

This invention is directed to coating compositions, preferably organic solvent-based coating compositions, comprising:
A) at least one cross-linkable compound having at least one functional group containing active hydrogen, wherein said cross-linkable compound is a polyester,
B) at least one polyisocyanate cross-linking agent with at least one free isocyanate group,
C) at least one catalyst for the curing reaction between the at least one functional group containing active hydrogen of component A and the at least one free isocyanate group of component B, said catalyst being a metal catalyst, and
D) at least one di-ether compound, said di-ether compound is
   (1) a compound of the general formula (I)

      R₁-O-CH₂-O-R₂ (I)

      wherein R₁ and R2 are each independently methyl or ethyl, or is
   (2) 1,3-dioxolane (II) or (3) 1,3-dioxane (III), 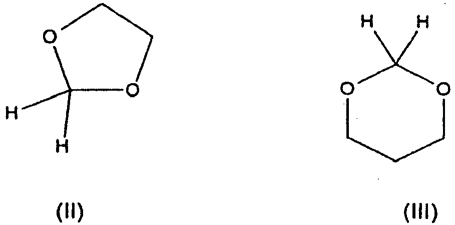 or a combination of (1), (2) and/or (3).

Surprisingly it has been found that the coating compositions of the present invention containing the di-ether compound D) have improved pot-life of, for example, 0.5 to 8 hours, while retaining acceptable short drying times at room temperature or at elevated temperatures, in particular short dust-free times. Contrary to known pot life extenders the presence of the di-ether compounds D) do not discolor the coating compositions and coated surfaces.

### DETAILED DESCRIPTION

These and other features and advantages of the present invention will be more readily understood, by those of ordinary skill in the art, from a reading of the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The term (meth)acrylic as used here and hereinafter should be taken to mean methacrylic and/or acrylic.

Unless stated otherwise, all the molar mass data, number-average molar mass data Mn or weight-average molar mass data Mw stated in the present description are molar masses determined or to be determined by gel permeation chromatography (GPC; divinylbenzene-crosslinked polystyrene as the immobile phase, tetrahydrofuran as the liquid phase, polystyrene standards).

The coating compositions according to the invention are liquid coating compositions comprising cross-linkable binders, cross-linking agents and a liquid carrier. The liquid carrier can be an organic solvent, a mixture of organic solvents and/or water. Therefore, the coating compositions can be organic solvent-based or water-based.

Organic solvent-based coating compositions are coating compositions, wherein organic solvents are used as solvent or thinner when preparing and/or applying the coating composition. Usually, organic solvent-based coating compositions can contain about 20 to 80% by weight of organic solvents, based on the total amount of the coating composition.

Water-based coating compositions are coating compositions, wherein water is used as solvent or thinner when preparing and/or applying the coating composition.

Pot life shall mean the time within which, once the mutually reactive components of a coating composition have been mixed, the coating composition may still be properly processed or applied and coatings of unimpaired quality can be achieved.

The coating compositions according to the invention are two-component coating compositions. The handling of two-component coating compositions generally requires mixing together the reactive components shortly before application to avoid premature reaction of the reactive components. The term "shortly before application" is well-known to a person skilled in the art working with two-component coating compositions. The time period within which the ready-to-use coating composition may be prepared prior to the actual use/application depends, e.g., on the pot life of the coating composition. Therefore, a sufficient long pot life is desired in order to have a comfortable time window for preparing/mixing and applying the two-component coating compositions.

The coating compositions according to the invention comprise the components A), B), C) and D).

Components A) and B) which are reactive with each other shall be stored separately and mixed together only shortly before application. Component C) and D) can be either part of component A) and/or B) or can be separate components.

Usually the coating compositions of the present invention can comprise 10 - 90 % by weight, preferably 30 - 70 % by weight of the at least one component A) and 10 - 90 % by weight, preferably 30 - 70 % by weight of the at least one cross-linking agent B), relative to the entire coating composition.

Component A) of the coating composition according to the invention is at least one polyester having at least one functional group containing active hydrogen, preferably having at least one hydroxyl group.

Examples of polyester resins which can be used as binder component A) include all polyester resins which are suited for coating compositions, for example, hydroxyl-functional polyesters with a number average molar mass of 500-10,000 g/mol, preferably, of 700-8,000 g/mol, an acid value of 0-50 mg KOH/g, and a hydroxyl value of 40-400 mg KOH/g, preferably, of 50-200 mg KOH/g. The polyesters can be saturated or unsaturated and they can optionally be modified with fatty acids. The polyesters are produced using known processes with elimination of water from polycarboxylic acids and polyalcohols or transesterification reaction of, e.g, dimethylesters of dicarboxylic acids with polyalcohols..

Particularly suitable polyesters are polyester oligomers having a number average molecular weight (Mn) of 200 - 3,000, preferably of 400 - 2,000, and a polydispersity of less than 1.7.

Useful polyester oligomers include polycaprolactone oligomers containing terminal hydroxyl groups which may be prepared by the ring-opening reaction of caprolactone with a polyol like e.g glycerine, trimethylolpropane and mono- pentaertythritol, in the presence of a catalyst, e.g., a tin catalyst. Such caprolactone oligomers are well known and described at length in Anderson et al. U.S. Pat. No. 5,354,797.

Other useful polyester oligomers include alkylene oxide polyester oligomers containing terminal hydroxyl groups which may be made by reacting an aliphatic, aromatic or cycloaliphatic monomeric anhydride or blend of those anhydrides with a polyol in solution at elevated temperatures in the presence or absence of a suitable catalyst using standard techniques and then capping the acid oligomers so formed with monofunctional epoxy compounds as, e.g., alkylene oxides, glycidylesters and glycidylethers. Cycloaliphatic anhydride monomers such as hexahydrophthalic anhydride and methyl hexahydrophthalic anhydride are typically employed in the polyester oligomers above. Aliphatic or aromatic anhydrides, such as succinic anhydride or phthalic anhydride may also be used in conjunction with the anhydrides described above. Typically useful linear or branched polyols include ethyleneglycol, 1,3-propanediol, 1,2-propanediol, 1,4-butanediol, 1,5-pentanediol, 1,6- hexanediol, 1,4-cyclohexane dimethanol, trimethylol propane, glycerine, trimethylolethane, mono-di- and tri - pentaerythritol. Useful monofunctional epoxy compounds include alkylene oxides having 2 to 12 carbon atoms. Ethylene, propylene and butylene oxides are preferred. Other epoxy compounds, such as glycidylpivalate or glycidylversatate (Cardura^{®} CE10P Hexion) may be used in conjunction with the monofunctional epoxies described above. Particularly preferred alkylene oxide oligomers are formed from methyl hexahydrophthalic anhydride; either 1,4-cyclohexanedimethanol, trimethylol propane, or pentaerythritol; and ethylene oxide reacted in stoichiometric amounts.

Furthermore suitable polyester oligomers can be prepared using a monoepoxyester, preferably a monoepoxyester of a branched polycarboxylic acid such as a tertiary fatty acid (for example, C10 versatic acid blend in Cardura^{®} CE10P or pivalic acid in glycidylpivalate). Those polyester oligomers can be synthesized by various routes, but preferably by employing a ring-opening polycondensation reaction in which a multifunctional polyol (preferably two to six-functional) or a blend of those polyols, so that the average functionality is at least two, are reacted with an anhydride and/or acid anhydride and further with a sufficient amount of a monoepoxyester to convert the acid groups into hydroxyl groups.

Suitable polyols for the above-mentioned synthesis are glycerine, trimethylolpropane, pentaerythritol, neopentyl glycol, ethyleneglycol, and the like. Suitable anhydrides for the above-mentioned synthesis include succinic anhydride, maleic anhydride, phthalic anhydride, hexahydrophthalic anhydride, methylhexahydrophthalic anhydride, and the like.

Suitable acid-anhydrides for the above-mentioned synthesis are trimellitic anhydride, hydrogenated trimellitic anhydride, the Diels-Alder adduct of maleic anhydride with sorbic acid, the hydrogenated Diels-Alder adduct of maleic anhydride and sorbic acid, and the like.

Suitable monoepoxyesters which can be used for the above-mentioned synthesis are the epoxyesters of benzoic acid, acetic acid, pivalic acid (Cardura^{®} CE5), versatic acid (Cardura^{®}CE10) and isobutyric acid (Cardura^{®}CE4).

Compatible blends of any of the aforementioned polyesters or polyester oligomers can be used as well as component A).

The coating composition according to the invention can contain the at least one polyester A) as the only one cross-linkable compound having at least one functional group containing active hydrogen, but can also comprise in addition to the at least one polyester A) other monomeric, oligomeric or polymeric compounds with functional groups reactive towards functional groups of cross-linking agent B). Those other compounds can be compounds in the form of low molar mass compounds defined by empirical and structural formula with molar mass in the range of 62 to 600 or oligomeric or polymeric binders. The binders are compounds with a number average molar mass (Mn) of, e.g., 300 to 500,000 g/mole, preferably of 500 to 30,000 g/mole. The functional groups with active hydrogen can be, for example, hydroxyl groups, thiol groups, primary and/or secondary amino groups or combinations thereof. Compounds having at least one functional group containing active hydrogen can also include those compounds containing blocked primary and/or secondary amino groups as well as blocked hydroxyl groups. Compounds with hydroxyl groups and/or thiol groups are preferably used in addition to polyesters A). Compounds with hydroxyl groups are most preferred.

The coating composition can also contain non-aqueous dispersions of polymers composed of structured copolymers (graft or block copolymers) where the dispersion can be cross-linked partly or 100%. Component (A) of the composition may also contain semi to fully crystalline particles, for example, sag control agents prepared by reaction of mono- and polyamines with mono- and polyisocyanates.

Examples of useful compounds having at least one functional group containing active hydrogen which can be used in addition to polyesters A) are described in the following.

Those compounds can be oligomeric or polymeric resins with hydroxyl groups, for example, hydroxyl-functional polyurethanes, (meth)acrylic copolymers, polyethers, alkyd, epoxy and vinyl resins and other binders, known from polymer chemistry to the skilled person, which are used in the formulation of coating compositions. They may each be used individually or in combination with one another.

Examples of suitable polyurethane resins include all polyurethane resins which are suited for coating compositions and known to a skilled person. Examples are polyurethane resins, for example, with a number average molar mass Mn of 500 to 500,000 g/mol most preferably of 1000 to 30,000 g/mol and a hydroxyl value of 40 to 400 mg KOH/g, preferably, of 80 to 250 mg KOH/g. Appropriate polyurethane resins can be prepared, for example, by reacting a blend of alcohols and polyols with mono - and polyisocyanates in such a molar ratio that there is an excess of hydroxyl groups.

Polyols of high molecular weight can be used as compounds which are reactive with respect to isocyanate groups, preferably polyester polyols, polyether polyols and/or polycarbonate polyols with a molecular weight of, for example, 500-6,000 g/mol. Polyols of low molecular weight with a molecular weight of 60-400 g/mol can also be co-used. Alcohols can be used as chain stoppers to control the final molecular weight. Aliphatic and/or cycloaliphatic mono-,di- and polyisocyanates can be used as isocyanates. Examples of useful diisocyanates are phenylene diisocyanate, xylylene diisocyanate, diphenylmethane diisocyanate, isophorone diisocyanate, dicyclohexylmethane diisocyanate, tetramethylene diisocyanate, hexamethylene diisocyanate.

Examples of monoisocyanates are hexylisocyanate, cyclohexylisocyanate and phenylisocyanate. Examples of polyisocyanates are the isocyanurate triisocyanates of isophorone disicyanate and 1,6-hexamethylenediisocyanate and the biuret of 1,6-hexamethylenediisocyanate.

The thus obtained polyurethane resins can still be subjected to chain extension to increase the molar mass. For example, NCO-functional polyurethane prepolymers can be reacted with compounds, which are reactive with respect to isocyanate groups. Compounds, which are reactive with respect to isocyanate groups, are in particular compounds with hydroxyl and/or secondary and/or primary amino groups. Hydroxyl functional polyurethane prepolymers can be further chain extended for example with polyisocyanates

Examples of hydroxyl-functional poly(meth)acrylate resins include all poly(meth)acrylate copolymers which are suited for organic solvent-based coating compositions and known to a skilled person. For example, they can be those with a number average molar mass Mn of 500-20000 g/mol, preferably, of 1100-15000, an acid value of 0-100 mg KOH/g, preferably, of 1-50 mg KOH/g and a hydroxyl value of 40-400 mg KOH/g, preferably, of 60-200 mg KOH/g.

The poly(meth)acrylate copolymer can be prepared by free-radical polymerization of polymerizable, olefinically unsaturated monomers. Free-radically polymerizable, olefinically unsaturated monomers, which may be used are monomers which, in addition to at least one olefinic double bond, also contain further functional groups and monomers which, apart from at least one olefinic double bond, contain no further functional groups. Further functional groups may be, for example, urea, hydroxyl, carboxyl, sulfonic acid, silane, amine, amide, acetoacetate or epoxy groups. It would be clear that only those functional groups can be combined in the poly(meth)acrylate copolymer which do not tend to self-crosslink during the sythesis process.

Olefinically unsaturated monomers with hydroxyl groups are used to introduce hydroxyl groups into the (meth)acrylic copolymers. Suitable hydroxy-functional unsaturated monomers are, for example, hydroxyalkyl esters of alpha, beta-olefinically unsaturated monocarboxylic acids with primary or secondary hydroxyl groups. These may, for example, comprise the hydroxyalkyl esters of acrylic acid, methacrylic acid,itaconic acid, crotonic acid and/or isocrotonic acid. The hydroxyalkyl esters of (meth)acrylic acid are preferred. Further olefinically unsaturated monomers with hydroxyl groups may, of course, also be used.

Carboxyl functional olefinically unsaturated monomers are used to introduce carboxyl groups into the (meth)acrylic copolymers. Examples of suitable olefinically unsaturated carboxylic acids include acrylic acid, methacrylic acid crotonic acid and isocrotonic acid, itaconic acid, maleic acid, fumaric acid and the halfesters of the difunctional acids. Acrylic and methacrylic acid are preferred.

Unsaturated monomers which, apart from at least one olefinic double bond, contain no further functional groups are, for example, aliphatic esters of olefinically unsaturated carboxylic acids, such as (meth)acrylic acid, vinyl esters and /or vinylaromatic hydrocarbons such as styrene.

Also, other additional unsaturated monomers, which contain apart from an olefinic double bond further functional groups can be used.

Thiol-functional compounds that can be used in the coating composition according to the invention in addition to polyesters A) can be compounds in the form of low molar mass compounds defined by empirical and structural formula with molar mass in the range of 200 to 600 or oligomeric or polymeric binders. The binders are compounds with a number average molar mass (Mn) of, e.g., 500 to 500,000 g/mole, preferably of 1100 to 300,000 g/mole.

Thiol-functional compounds A) that can suitably be used in the coating composition according to the invention are esters of a thiol-functional carboxylic acid with a polyol, such as esters of 2-mercaptoacetic acid, 3-mercaptopropionic acid, 2-mercapto- propionic acid, 11-mercaptoundecanoic acid, and mercaptosuccinic acid. Examples of such esters include pentaerythritol tetrakis (3-mercaptopropionate), pentaerythritol tetrakis (2-mercaptoacetate), trimethylol propane tris (3-mercaptopropionate), trimethylol propane tris (2-mercaptopropionate), and trimethylol propane tris (2-mercaptoacetate). A further example is a compound of a hyperbranched polyol core based on a starter polyol, e.g. trimethylol propane and dimethylol propionic acid, which is subsequently esterified with 3-mercaptopropionic acid and isononanoic acid. Those compounds are described for example in EP 0 448 224.

The coating compositions may also contain compounds with blocked primary and/or secondary amino groups. Those compounds with blocked amino groups may be used alone or in combination with other compounds A), for example, with compounds having hydroxyl groups.

Examples of compounds with blocked amino groups are aldimines, ketimines, amide-acetals and oxazolidines.

According to one embodiment the coating composition of the present invention comprises a combination of at least one hydroxyl-functional polyester A), in particular a hydroxyl-functional polyester oligomer as described above, and at least one hydroxyl-functional (meth)acrylic copolymer. The coating composition can comprise, for example, 30-70% by weight of the at least one hydroxyl-functional (meth)acrylic copolymer and 30-70 % by weight of the at least one hydroxyl-functional polyester A), in particular the hydroxyl-functional polyester oligomer A), based on the entire amount of hydroxyl-functional (meth)acrylic copolymer and hydroxyl-functional polyester A). Useful hydroxyl-functional (meth)acrylic copolymers and hydroxyl-functional polyester oligomers as well as combinations thereof are disclosed, for example, in EP 801 661 and US 6,472,493

The coating compositions according to the invention contain polyisocyanates with free isocyanate groups as cross-linking agents (component B). Examples of the polyisocyanates are any number of organic di- or higher functional isocyanates with aliphatically, cycloaliphatically, araliphatically and/or aromatically bound free isocyanate groups. The polyisocyanates are liquid at room temperature or can become liquid through the addition of organic solvents. At 23°C, the polyisocyanates generally can have a viscosity of 1 to 6,000 mPas, preferably, of 5 to 3,000 mPas. However, the viscosity depends on the amount of organic solvent present. The preferred polyisocyanates are polyisocyanates or polyisocyanate mixtures with exclusively aliphatically and/or cycloaliphatically bound isocyanate groups with an average NCO functionality of 1.5 to 5, preferably 2 to 4.

Examples of particularly suitable polyisocyanates are what are known as "paint polyisocyanates" based on hexamethylene diisocyanate (HDI), 1-isocyanato-3,3,5-trimethyl-5-isocyanatomethyl-cyclohexane (IPDI) and/or bis(isocyanatocyclohexyl)-methane and the derivatives known per se, containing biuret, allophanate, urethane and/or isocyanurate groups of these diisocyanates which, following production, are freed from surplus parent diisocyanate, preferably by distillation, with only a residue content of less than 0.5% by weight. Triisocyanates, such as, triisocyanatononan can also be used.

Sterically hindered polyisocyanates are also suitable. Examples of these are 1,1,6,6-tetramethyl-hexamethylene diisocyanate, 1,5-dibutyl-penta-methyldiisocyanate, p- or m-tetramethylxylylene diisocyanate and the appropriate hydrated homologues.

In principle, diisocyanates can be converted by the usual methods to higher functional compounds, for example, by trimerization or by reaction with water or polyols, such as, for example, trimethylolpropane or glycerine. The polyisocyanates can also be used in the form of isocyanate-modified resins.

The polyisocyanate cross-linking agents can be used individually or in combination.

The polyisocyanate cross-linking agents are those commonly used in the paint industry, and are described in detail in the literature and are also obtainable commercially.

The catalyst compound C) is at least one metal catalyst that is able to accelerate the curing reaction between the functional groups of components A) and B). The metal catalyst is preferably a metal compound with an organic ligand where the metal is a metal of groups 3 to 15 of the Periodic Table. If thiol-functional compounds are present the metal is preferably a transition metal. More preferably, the metal is a metal of Period 4 of the Periodic Table, e.g., zirconium or titanium. In case of hydroxy-functional polyesters A) and other hydroxyl-functional compounds the metal is preferably tin, zinc, bismuth and zirconium, most preferred it is tin. Tin is preferably used as a salt in its oxidation state IV.

The metal catalyst comprises metal salts and/or metal complexes of organic compounds. The organic compounds are compounds having 2 to 40 carbon atoms, optionally comprising atoms such as O, N, and S. The metal salts comprise anions selected from the group of carboxylates. Examples thereof include propionate, butyrate, pentanoate, 2-ethyl hexanoate, naphthenate, oxalate, malonate, succinate, glutamate, and adipate. The metal complexes can comprise ligands selected from the group of beta-diketones, alkyl acetoacetates, alcoholates, and combinations thereof. Examples thereof include acetyl acetone (2,4-pentanedione), 2,4-heptanedione, 6-methyl-2,4-heptadione, 2,4-octanedione, propoxide, isopropoxide, and butoxide Examples of above metal complexes include aluminium complexed with 2,4- pentanedione (aluminium triacetyl acetonate), zirconium tetraacetyl acetonate, zirconium tetrabutanolate, titanium tetrabutanolate, titanium acetylacetonate, zirconium complexed with 6-methyl-2,4-heptadione, aluminium triisopropoxide, titanium diisopropoxide bis-2,4(pentadionate), and bismuth octoate. Those metal complexes are commercially available and can be used alone or in combination.

In case of hydroxyl-functional components A) and other hydroxyl-functional compounds tin catalysts are most preferred catalysts. Examples of tin catalysts are organotin carboxylates, e.g. dialkyl tin carboxylates of aliphatic carboxylic acids, such as dibutyl tin dilaurate (DBTL).

Catalysts can be used as single catalysts or in combination with each other. If compounds with hydroxyl and thiol groups are present appropriate catalysts have to be selected for each curing chemistry.

The coating composition of the present invention preferably comprises the at least one catalyst C) in an amount of 0,01 to 5 % by weight, preferably of 0,05 to 1 % by weight based on the sum of solids of component A) and isocyanate component B).

The di-ether compound D) is
(1) a compound of the general formula (I)

   R₁-O-CH₂-O-R₂ (I)

   wherein R₁ and R2 are each independently methyl or ethyl, or is
(2) 1,3-dioxolane (II) or (3) 1,3-dioxane (III), 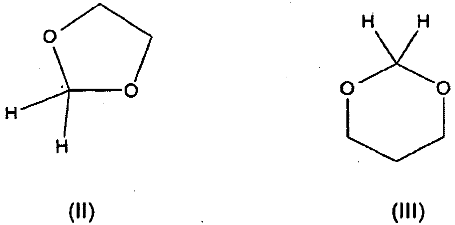 or a combination of (1), (2) and/or (3).

Preferably di-ether compound D) is methylal (CH₃-O-CH₂-O-CH₃), ethylal (C₂H₅-O-CH₂-O-C₂H₅), 1,3-dioxolane or 1,3-dioxane. Di-ether compounds D) can also be a combination of two or more of the above preferred compounds. The at least one di-ether compound D) can be used in combination with known pot life extenders.

The coating compositions can contain 0.1 - 100 % by weight, preferably 0.5 -100 % by weight of the di-ether compound D), based on the total amount of volatile organic compounds in the coating composition, wherein the total amount of volatile organic compounds include the di-ether compounds D). Volatile organic compound means any organic compound having a boiling point of below 250 °C at ambient pressure.

The di-ether compound should be present in a minimum amount of 0.1 % by weight, preferably of 0.5 % by weight, based on the total amount of volatile organic compounds in the coating composition to provide a remarkable pot life extending effect. In those amounts the di-ether can be considered as an additive. However, di-ether compound D) may also be used in higher amounts of up to 100 % by weight based on the total amount of volatile organic compounds. That means, the di-ether compound D) can be used as the only one volatile organic compound (which corresponds to 100 % by weight) or can be used in combination with other volatile organic compounds, i.e. other organic solvents.

The coating compositions according to the invention have a solids content of, for example, 30 to 95 % by weight, preferably 45 to 80 % by weight and accordingly a content of volatile organic compounds of 5 to 70 % by weight, preferably 20 to 55 % by weight.

The molar ratio of groups reactive towards functional groups of the cross-linking agent, preferably the hydroxyl groups and optionally other reactive groups such as thiol or amino groups to the isocyanate groups of the at least one polyisocyante cross-linking agent B), are for example, 0.5 : 1 to 3 1, in particular 0.7 : 1 to 2 : 1.

The coating compositions, according to the invention may contain additional organic solvents besides the di-ether compound D).

Those additional organic solvents are solvents conventionally used in coating techniques. These may originate from the preparation of the binders or are added separately. Examples of suitable solvents are monohydric or polyhydric alcohols, e.g., propanol, butanol, hexanol; glycol ethers or esters, for example, diethylene glycol dialkyl ether, dipropylene glycol dialkyl ether, each with C1- to C6-alkyl, ethoxypropanol, butyl glycol; glycols, for example, ethylene glycol, propylene glycol, and ketones, e.g., methyl ethyl ketone, acetone, cyclohexanone; aromatic or aliphatic hydrocarbons, for example, toluene, xylene, or straight-chain or branched aliphatic C6-C12-hydrocarbons.

The coating compositions, according to the invention, can contain pigments, fillers and/or usual coating additives. All colour and/or special effect-giving pigments of organic or inorganic type used in paints are suitable for pigments. Examples of inorganic or organic colour pigments are titanium dioxide, micronized titanium dioxide, iron oxide pigments, carbon black, azo pigments, phthalocyanine pigments, quinacridone or pyrrolopyrrole pigments. Examples of special effect pigments are metal pigments, for example, from aluminum or copper, interference pigments, such as, for example, aluminum coated with titanium dioxide, coated mica, graphite effect pigments and iron oxide laminae. Examples of fillers are silicon dioxide, barium sulfate, talcum, aluminum silicate and magnesium silicate.

The additives are additives usually used in the paint industry. Examples of such additives are light stabilizers, for example, based on benztriazoles and HALS (hindered amine light stabilizer) compounds, flow control agents based on (meth)acrylic homopolymers or silicon oils, rheology-influencing agents, such as, highly disperse silicic acid or polymeric urea compounds, thickeners, such as, cross-linked polycarboxylic acid or polyurethanes, anti-foaming agents, wetting agents, photoinitiators. The additives are added in the usual amounts familiar to the person skilled in the art.

When preparing the two components of the coating compositions of the present invention (base component and cross-linking component) the catalyst can be part of the base component containing the cross-linkable component A) and optionally other cross-linkable compounds, or of the cross-linking component containing the polyisocyanate cross-linking agent B), or of both.

According to one embodiment the catalyst C) is added to the diether compound D) or to a part of diether compound D) and the mixture of both components is added to the coating composition, i.e. to one or both of the two components A) and B). The diether compound D) can also be added as such to the coating composition or can be added in combination with the catalyst to the final coating composition.

The longer pot life of the coating composition according to the invention is particularly advantageous. Conventional coating compositions based on hydroxyl, amine or thiol functional binders and polyisocyanate cross-linking agents and containing a relatively high concentration of curing catalyst are in fact distinguished by extremely limited pot life if no specific measures have been taken. High amounts of catalysts are added to get a fast curing reaction on the substrate in order to get a fast drying, but pot-life should still be acceptable. A short pot-life is caused by a rapid reaction between the hydroxyl-, amine- or thiol-functional compounds and the polyisocyanate cross-linking agent when mixed with one another, when a curing catalyst is present. This is perceptible by a fast increase in the viscosity of the coating composition. The pot life after mixing (when A and B are brought into contact) amounts, for example, from 30 minutes to 8 hours depending on what is needed for the end-use. Typically longer pot life results in slower drying while shorter pot life results in faster drying. It is assumed that the addition of the di-ethers according to the present invention inactivates the catalyst in the pot but not during the film formation stage. In particular the di-ethers have a remarkable pot life increasing effect in organic solvent-based coating compositions. Therefore, the present invention relates preferably to organic solvent-based coating compositions.

The coating compositions of the present invention may be used for the production of single-layer coatings or for the production of one or more coating layers within a multilayer coating, such as, in particular, an automotive multilayer coating, either on an automotive body or on an automotive body part. This may relate to both original and repair coating applications. The coating compositions may be used in pigmented form for the production of a primer surfacer layer or a single stage top coat layer or in pigment-free form for the production of an outer clear top coat layer or a transparent sealing layer of a multilayer coating. They can preferably be used for the production of a clear top coat layer on a previously applied color-imparting and/or special effect-imparting, optionally pre-dried, base coat layer or as a pigmented single stage top coat layer.

The coating compositions may be applied by means of conventional application methods, in particular, by spraying onto any desired uncoated or pre-coated substrates, for example, of metal or plastics. Once applied, layers of the coating compositions according to the invention may initially be flashed off to remove solvent, for example. Curing may then proceed at room temperature or forced at higher temperatures.

The present invention also relates to a process for preparing a coating on a substrate, said process comprising the steps:
1) applying a coating layer from the coating composition of the present invention, and
2) thermally curing the coating layer.

The present invention also relates to the use of the coating composition of the present invention in a process for preparing a coating on a substrate, said process comprising the steps:
1) applying a coating layer from said coating composition, and
2) thermally curing the coating layer.

Optionally, the applied coating layer may be flashed off to remove organic solvents.

The coating compositions and the process, according to the invention, are suitable for automotive and industrial coatings. In the automotive coatings sector, the coatings can be used for both vehicle production line painting and vehicle and vehicle part refinishing as well as for coating large vehicles and transportation vehicles, such as, trucks, busses and railroad cars. For vehicle production line painting, baking temperatures of 80 to 180°C, for example, are used, preferably 110 to 140°C. For refinishing curing temperatures of for example, 20°C to 80°C, in particular, 20 to 60°C are used.

Besides a remarkably improved pot-life the coating compositions according to the present invention cure in acceptable drying times (e.g. short dust free or tack-free times). Also, the coating compositions lead to coatings with excellent appearance, e.g. coatings with high gloss and without surface defects. The presence of the pot life extender does not lead to discoloration of the composition and coated surface.

The following examples are intended to illustrate the invention in greater detail. All parts and percentages are on a weight basis unless otherwise indicated.

### EXAMPLES

### Preparation Example 1

### Preparation of a hydroxyfunctional polyester

160.16 g of butylacetate, 136 g of monopentaerythritol, and 504 g of methylhexahydrophthalic anhydride were loaded in a glass reactor and heated to reflux until dissolved (140-160°C). Afterwards, 750 g of neodecanoic acid glycidyl ester (Cardura^{®} E10P (glycidyl ester of versatic acid) from Resolution) were added, followed by 1.39 g of dibutyl tin dilaurate dissolved in 8.61 g of butylacetate. The mixture was further refluxed (175°C) until the acid number was below 3. A further 177.33 g of butylacetate were added. The total reaction time was about 3 hours.

The resulting polymer solution had a solids content of 80.5% (1 h, 105 °C), a viscosity of X measured by Gardner-Holdt, an acid value of 2.8 mg KOH/g and a Mn/Mw = 1190/1460 measured by Gel Permeation Chromatography.

### Paint examples I

Paints (base components) have been prepared by mixing the ingredients given in Table 1a. Examples I B and I D are examples according to the invention containing ethylal, while examples I A and I C are comparative examples containing butylacetate as a replacement for ethylal. DBTL = dibutyl tin dilaurate

**Table 1a:**

| | A | B | C | D |
|---|---|---|---|---|
| Polyester example 1 | 80 | 80 | 80 | 80 |
| 1% DBTDL in butylacetate | 0.8 | | 4 | |
| 1% DBTDL in ethylal | | 0.8 | | 4 |
| Butylacetate | 19.2 | 19.2 | 16 | 16 |
| | | | | |
| Total | 100 | 100 | 100 | 100 |

Activators have been prepared by mixing the ingredients given in Table 1 b.

**Table 1b:**

| | A | B | C | D |
|---|---|---|---|---|
| Desmodur N3390 | 83.33 | 83.33 | | |
| Desmodur Z4470 BA | | | 85.71 | 85.71 |
| 1% DBTDL in butylacetate | 0.94 | | 3.75 | |
| 1% DBTDL in ethylal | | 0.94 | | 3.75 |
| Butylacetate | 15.73 | 15.73 | 10.54 | 10.54 |
| | | | | |
| Total | 100 | 100 | 100 | 100 |

100 parts Paint example A were mixed with 47.5 parts of Activator A and 100 parts Paint example B with 47.5 parts of Activator B to give a ratio NCO/OH about 1/1 and a DBTDL content of 125 ppm on solids.

The blend of A doubled in viscosity starting from about 75 cps in about 90 minutes. In about 420 minutes the viscosity raised till 750 cps while the blend of B remained almost constant in viscosity over the 420 minutes period.

100 parts Paint example C were mixed with 77 parts of Activator C and 100 parts Paint example D with 77 parts of Activator D to give a ratio NCO/OH about 1/1 and a DBTDL content of 625 ppm on solids.

The blend of C doubled in viscosity starting from about 65 cps in about 40 minutes. In about 420 minutes the viscosity raised till 540 cps while the blend of D remained almost constant in viscosity over the 420 minutes period

### Paint examples II

Paints (base components) have been prepared by mixing the ingredients given in Table 2a. Examples II B and II D are examples according to the invention containing ethylal and methylal, while examples II A, C and E are comparative examples containing butylacetate and ethyleneglycol diethylether (EGDEE).
BiOCT = Bismuth octoate (TIBKAT 720 from TIB Chemicals)

**Table 2a:**

| | A | B | C | D | E |
|---|---|---|---|---|---|
| Polyester example 1 | 80 | 80 | 80 | 80 | 80 |
| 1% BiOCT in butylacetate | 8 | | | | |
| 1% BiOCT in ethylal | | 8 | | | |
| 4% BiOCT in butylacetate | | | 8 | | |
| 4% BiOCT in methylal | | | | 8 | |
| 4% BiOCT in EGDEE | | | | | 8 |
| Butylacetate | 12 | 12 | 12 | 12 | 12 |
| | | | | | |
| Total | 100 | 100 | 100 | 100 | 100 |

Activators have been prepared by mixing the ingredients given in Table 2b.

**Table 2b:**

| | A | B | C | D | E |
|---|---|---|---|---|---|
| Desmodur Z4470 BA | 85.71 | 85.71 | 85.71 | 85.71 | 85.71 |
| 1% BiOCT in butylacetate | 7.5 | | | | |
| 1% BiOCT in ethylal | | 7.5 | | | |
| 4% BiOCT in butylacetate | | | 7.5 | | |
| 4% BiOCT in methylal | | | | 7.5 | |
| 4% BiOCT in EGDEE | | | | | 7.5 |
| Butylacetate | 6.79 | 6.79 | 6.79 | 6.79 | 6.79 |
| | | | | | |
| Total | 100 | 100 | 100 | 100 | 100 |

100 parts Paint example II A were mixed with 77 parts of Activator II A and 100 parts Paint example II B with 77 parts of Activator II B to give a ratio NCO/OH about 1/1 and a BiOCT content of 1250 ppm on solids.. The blend of II A doubled in viscosity starting from about 65 cps in about 60 min. In about 420 min the viscosity raised till 260 cps while the blend of II B slightly increased in viscosity over the 420 min period to about 85 cps

100 parts Paint example II C were mixed with 77 parts of Activator II C, 100 parts Paint example II D with 77 parts of Activator II D and 100 parts of Paint example II E with 77 parts of Activator II E to give a ratio NCO/OH about 1/1 and a BiOCT content of 5000 ppm on solids.. The blends of II C and II E tripled in viscosity starting from about 65 cps in about 10 min. In about 100 min the viscosity raised till 25000 cps while the blend of II D doubled in viscosity after 25 min and only reached 400 cps after about 100 min.

### Paint examples III

Paints (base components) have been prepared by mixing the ingredients given in Table 3a. Examples III B and III C are examples according to the invention containing methylal and 1,3-dioxolane, while examples III A, D, E and F are comparative examples containing comparative di-ethers.

**Table 3a:**

| | A | B | C | D | E | F | G |
|---|---|---|---|---|---|---|---|
| Polyester example 1 | 80 | 80 | 80 | 80 | 80 | 80 | 80 |
| 5% DBTDL in | | | | | | | |
| Butylacetate | 0.64 | 0.64 | 0.64 | 0.64 | 0.64 | 0.64 | 0.64 |
| Butylacetate | 19.36 | 15.16 | 15.26 | 13.61 | 14.36 | 13.71 | 12.71 |
| Methylal | | 4.2 | | | | | |
| 1,3-Dioxolane | | | 4.1 | | | | |
| 2,2'-Dimethoxypropane | | | | 5.75 | | | |
| Acetaldehydedimethylacetale | | | | | 5.00 | | |
| 2,2'-Dimethyldioxolane | | | | | | 5.65 | |
| Trimethylorthoacetate | | | | | | | 6.65 |
| Total | 100 | 100 | 100 | 100 | 100 | 100 | 100 |

Activators have been prepared by mixing the ingredients given in Table 3b.

**Table 3b:**

| | A | B | C | D | E | F | G |
|---|---|---|---|---|---|---|---|
| Desmodur N3390 5% DBTDL | 83.33 | 83.33 | 83.33 | 83.33 | 83.33 | 83.33 | 83.33 |
| in Butylacetate | 0.75 | 0.75 | 0.75 | 0.75 | 0.75 | 0.75 | 0.75 |
| Butylacetate | 15.92 | 11.72 | 11.82 | 10.17 | 10.92 | 10.27 | 9.27 |
| Methylal | | 4.2 | | | | | |
| 1,3-Dioxolane | | | 4:1 | | | | |
| 2,2'-Dimethoxypropane | | | | 5.75 | | | |
| Acetaldehydedimethylacetale | | | | | 5.00 | | |
| 2,2'-Dimethyldioxolane | | | | | | 5.65 | |
| Trimethylorthoacetate | | | | | | | 6.65 |
| Total | 100 | 100 | 100 | 100 | 100 | 100 | 100 |

100 parts Paint example III A to G were mixed with 50 parts of Activator III A to G to give a ratio NCO/OH about 1,05/1 and a DBTDL content of 500 ppm on solids..

The blends of III A, D, E and F doubled in viscosity starting from about 75 cps in about 15 min. In about 2-3 hours the blends gelled. Blend III G doubled in viscosity in 10 min and gelled after about 1 hour. Blend III B doubled in viscosity after about 45 min and did not gel in 8 hours while blend III C doubled in about 25 min and gelled after about 6 hours.

The results clearly show that the presence of the specific di-ethers in the paint compositions according to the invention provide a remarkable pot-life extending effect. The presence of the di-ethers does not cause discoloration of the coating composition.

## Claims

1. Coating composition comprising:
A) at least one cross-linkable compound having at least one functional group containing active hydrogen, wherein said cross-linkable compound is a polyester,
B) at least one polyisocyanate cross-linking agent with at least one free isocyanate group,
C) at least one catalyst for the curing reaction between the at least one functional group containing active hydrogen of component A and the at least one free isocyanate group of component B, said catalyst being a metal catalyst, and
D) at least one diether compound, said diether compound is
(1) a compound of the general formula (I)
R₁-O-CH₂-O-R₂, (I)
wherein R₁ and R2 are each independently methyl or ethyl, or is
(2) 1,3-dioxolane (II) or (3) 1,3-dioxane (III), 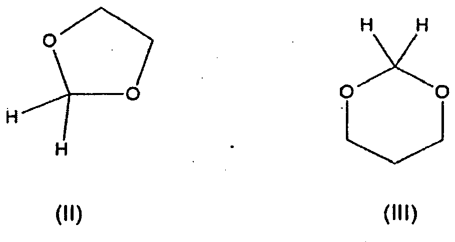 or a combination of (1), (2) and/or (3).

2. The coating composition of claim 1, comprising 0.1 to 100 % by weight of the diether compound D), based on the total amount of volatile organic compounds in the coating composition

3. The coating composition of claim 2, comprising 0.5 to 100 % by weight of the diether compound D), based on the total amount of volatile organic compounds in the coating composition

4. The coating composition of any one of claims 1 to 3, wherein the metal catalyst C) comprises metal salts and/or metal complexes of organic compounds.

5. The coating composition of any one of claims 1 to 4, wherein the metal catalyst C) is aluminium complexed with 2,4- pentanedione, aluminium triacetyl acetonate, zirconium tetraacetyl acetonate, zirconium tetrabutanolate, titanium tetrabutanolate, titanium acetylacetonate, zirconium complexed with 6-methyl-2,4-heptadione, aluminium triisopropoxide, titanium diisopropoxide bis-2,4(pentadionate), bismuth octoate or a combination thereof.

6. The coating composition of any one of claims 1 to 5, wherein the metal catalyst C) is a dialkyl tin carboxylate of an aliphatic carboxylic acid.

7. The coating composition of any one of claims 1 to 6, wherein the metal catalyst C) is present in an amount of 0,01 to 5 % by weight, based on the sum of solids of component A) and isocyanate component B).

8. The coating composition of claim 7, wherein the metal catalyst C) is present in an amount of 0,05 to 1 % by weight, based on the sum of solids of component A) and isocyanate component B).

9. The coating composition of any one of claims 1 to 8, wherein the at least one cross-linkable compound having at least one functional group containing active hydrogen is a hydroxyl-functional polyester.

10. The coating composition of claim 1, wherein the hydroxyl-functional polyester is a hydroxyl-functional polyester oligomer having a weight average molecular weight (Mw) of 200 - 3,000 and a polydispersity of less than 1.7.

11. The coating composition of any one of claims 1 to 10, further comprising at least one hydroxyl-functional (meth)acrylic copolymer.

12. Process for preparing a coating on a substrate, comprising the steps:
1. applying a coating layer from a coating composition of any one of claims 1 to 11,
2. optionally, flashing off the applied coating layer to remove solvents, and
3. thermally curing the coating layer.

13. The process of claim 12, wherein the coating composition is a clear top coat coating composition or a pigmented single-stage top coat coating composition.

14. Use of the coating composition of any one of claims 1 to 11 in a process for preparing a coating on a substrate, comprising the steps:
1. applying a coating layer from said coating composition,
2. optionally, flashing off the applied coating layer to remove solvents, and
3. thermally curing the coating layer.

15. The use of claim 14, wherein the coating composition is a clear top coat coating composition or a pigmented single-stage top coat coating composition.

16. Use of the process of claim 12 or 13 in vehicle production line painting and vehicle and vehicle part refinishing.

17. Use of the coating composition of any one of claims 1 to 11 in vehicle production line painting and vehicle and vehicle part refinishing.

## Patentansprüche

1. Beschichtungszusammensetzung umfassend:
A) mindestens eine vernetzbare Verbindung, die mindestens eine funktionelle Gruppe aufweist, die aktiven Wasserstoff enthält, wobei die vernetzbare Verbindung ein Polyester ist,
B) mindestens ein Polyisocyanat-Vernetzungsmittel mit mindestens einer freien Isocyanatgruppe,
C) mindestens einen Katalysator für die Aushärtungsreaktion zwischen der mindestens einen funktionellen Gruppe, die den aktiven Wasserstoff der Komponente A enthält, und der mindestens einen freien Isocyanatgruppe der Komponente B), wobei der Katalysator ein Metallkatalysator ist, und
D) mindestens eine Dietherverbindung, wobei die Dietherverbindung
(1) eine Verbindung der allgemeinen Formel (I)
R₁-O-CH₂-O-R₂ (I)
wobei R₁ und R₂ jeweils unabhängig Methyl oder Ethyl sind, oder
(2) 1,3-Dioxolan (II) oder (3) 1,3-Dioxan (III) 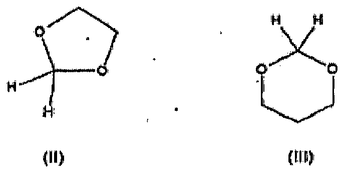 oder eine Kombination von (1), (2) und/oder (3) ist.

2. Beschichtungszusammensetzung nach Anspruch 1, umfassend 0,1 bis 100 Gew.-% der Dietherverbindung D), auf die Gesamtmenge flüchtiger organischer Verbindungen in der Beschichtungszusammensetzung bezogen.

3. Beschichtungszusammensetzung nach Anspruch 2, umfassend 0,5 bis 100 Gew.-% der Dietherverbindung D) auf die Gesamtmenge flüchtiger organischer Verbindungen in der Beschichtungszusammensetzung bezogen.

4. Beschichtungszusammensetzung nach einem der Ansprüche 1 bis 3, wobei der Metallkatalysator (C) Metallsalze und/oder Metallkomplexe organischer Verbindungen umfasst.

5. Beschichtungszusammensetzung nach einem der Ansprüche 1 bis 4, wobei der Metallkatalysator C) mit 2,4-Pentandion komplexiertes Aluminium, Aluminiumtriacetylacetonat, Zirconiumtetraacetylacetonat, Zirconiumtetrabutanolat, Titantetrabutanolat, Titanacetylacetonat, mit 6-Methyl-2,4-heptadion komplexiertes Zirkonium, Aluminiumtriisopropoxid, Titandiisopropoxid-bis-2,4(pentadionat), Wismutoctoat oder eine Kombination davon ist.

6. Beschichtungszusammensetzung nach einem der Ansprüche 1 bis 5, wobei der Metallkatalysator C) ein Dialkylzinncarboxylat einer aliphatischen Carbonsäure ist.

7. Beschichtungszusammensetzung nach einem der Ansprüche 1 bis 6, wobei der Metallkatalysator C) in einer Menge von 0,01 bis 5 Gew.-%, auf die Summe von Feststoffen der Komponente A) und der Isocyanatkomponente B) bezogen, vorliegt.

8. Beschichtungszusammensetzung nach Anspruch 7, wobei der Metallkatalysator C) in einer Menge von 0,05 bis 1 Gew.-%, auf die Summe von Feststoffen der Komponente A) und der Isocyanatkomponente B) bezogen, vorliegt.

9. Beschichtungszusammensetzung nach einem der Ansprüche 1 bis 8, wobei die mindestens eine vernetzbare Verbindung, die mindestens eine funktionelle Gruppe aufweist, die aktiven Wasserstoff enthält, ein hydroxyfunktioneller Polyester ist.

10. Beschichtungszusammensetzung nach Anspruch 1, wobei der hydroxyfunktionelle Polyester ein hydroxyfunktionelles Polyesteroligomer ist, das ein gewichtsdurchschnittliches Molekulargewicht (Mw) von 200 - 3.000 und eine Polydispersität von weniger als 1,7 aufweist.

11. Beschichtungszusammensetzung nach einem der Ansprüche 1 bis 10, des Weiteren mindestens ein hydroxyfunktionelles (Meth)acrylsäure-Copolymer umfassend.

12. Verfahren für die Herstellung einer Beschichtung auf einem Substrat, umfassend die Schritte des:
1. Aufbringens einer Beschichtungsschicht aus einer Beschichtungszusammensetzung nach einem der Ansprüche 1 bis 11,
2. wahlweisen Ablüftens der aufgebrachten Beschichtungsschicht, um Lösungsmittel zu entfernen, und
3. Wärmeaushärtens der Beschichtungsschicht.

13. Verfahren nach Anspruch 12, wobei die Beschichtungszusammensetzung eine klare Decklackbeschichtungszusammensetzung oder eine pigmentierte Einstufen-Decklackbeschichtungszusammensetzung ist.

14. Verwendung der Beschichtungszusammensetzung nach einem der Ansprüche 1 bis 11 bei einem Verfahren für die Herstellung einer Beschichtung auf einem Substrat, umfassend die Schritte des:
1. Aufbringens einer Beschichtungsschicht aus der Beschichtungszusammensetzung,
2. wahlweisen Ablüftens der aufgebrachten Beschichtungsschicht, um Lösungsmittel zu entfernen, und
3. Wärmeaushärtens der Beschichtungsschicht.

15. Verwendung nach Anspruch 14, wobei die Beschichtungszusammensetzung eine klare Decklackbeschichtungszusammensetzung oder eine pigmentierte Einstufen-Decklackbeschichtungszusammensetzung ist.

16. Anwendung des Verfahrens nach Anspruch 12 oder 13 beim Lackieren in der Fahrzeugfertigungsstraße und Fahrzeug- und Fahrzeugteil-Reparaturlackieren.

17. Verwendung der Beschichtungszusammensetzung nach einem der Ansprüche 1 bis 11 beim Lackieren in der Fahrzeugfertigungsstraße und Fahrzeug- und Fahrzeugteil-Reparaturlackieren.

## Revendications

1. Composition de revêtement comprenant :
A) au moins un composé réticulable comportant au moins un groupe fonctionnel contenant de l'hydrogène actif, ledit composé réticulable étant un polyester,
B) au moins un agent de réticulation polyisocyanate ayant au moins un groupe isocyanate libre,
C) au moins un catalyseur pour la réaction de durcissement entre l'au moins un groupe fonctionnel contenant de l'hydrogène actif du composant A et l'au moins un groupe isocyanate libre du composant B, ledit catalyseur étant un catalyseur métallique, et
D) au moins un composé diéther, ledit composé diéther étant
(1) un composé de formule générale (I)
R₁-O-CH₂-O-R₂ (I)
dans laquelle chacun de R₁ et R₂ est indépendamment méthyle ou éthyle, ou étant
(2) le 1,3-dioxolane (II) ou (3) le 1,3-dioxane (III), 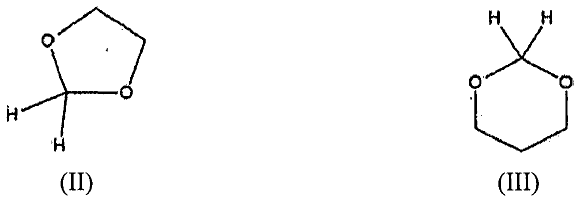 ou une combinaison de (1), (2) et/ou (3).

2. Composition de revêtement selon la revendication 1, comprenant 0,1 à 100 % en poids du composé diéther D) par rapport à la quantité totale de composés organiques volatils dans la composition de revêtement.

3. Composition de revêtement selon la revendication 2, comprenant 0,5 à 100 % en poids du composé diéther D) par rapport à la quantité totale de composés organiques volatils dans la composition de revêtement.

4. Composition de revêtement selon l'une quelconque des revendications 1 à 3, dans laquelle le catalyseur métallique C) comprend des sels métalliques et/ou des complexes métalliques de composés organiques.

5. Composition de revêtement selon l'une quelconque des revendications 1 à 4, dans laquelle le catalyseur métallique C) est de l'aluminium complexé avec de la 2,4-pentanedione, du triacétylacétonate d'aluminium, du tétraacétylacétonate de zirconium, du tétrabutanolate de zirconium, du tétrabutanolate de titane, de l'acétylacétonate de titane, du zirconium complexé avec de la 6-méthyl-2,4-heptadione, du triisopropylate d'aluminium, du diisopropylate-bis-2,4(pentadionate) de titane, de l'octoate de bismuth, ou une de leurs combinaisons.

6. Composition de revêtement selon l'une quelconque des revendications 1 à 5, dans laquelle le catalyseur métallique C) est un carboxylate de dialkyl-étain et d'un acide carboxylique aliphatique.

7. Composition de revêtement selon l'une quelconque des revendications 1 à 6, dans laquelle le catalyseur métallique C) est présent en une quantité de 0,01 à 5 % en poids par rapport à la somme des solides du composant A) et du composant isocyanate B).

8. Composition de revêtement selon la revendication 7, dans laquelle le catalyseur métallique C) est présent en une quantité de 0,05 à 1 % en poids par rapport à la somme des solides du composant A) et du composant isocyanate B).

9. Composition de revêtement selon l'une quelconque des revendications 1 à 8, dans laquelle l'au moins un composé réticulable comportant au moins un groupe fonctionnel contenant de l'hydrogène actif est un polyester à fonctionnalité hydroxyle.

10. Composition de revêtement selon la revendication 1, dans laquelle le polyester à fonctionnalité hydroxyle est un oligomère de polyester à fonctionnalité hydroxyle présentant une masse moléculaire moyenne en masse (Mw) de 200 à 3000 et une polydispersité inférieure à 1,7.

11. Composition de revêtement selon l'une quelconque des revendications 1 à 10, comprenant en outre au moins un copolymère (méth)acrylique à fonctionnalité hydroxyle.

12. Procédé pour préparer un revêtement sur un substrat, comprenant les étapes consistant à :
1. appliquer une couche de revêtement à partir d'une composition de revêtement selon l'une quelconque des revendications 1 à 11,
2. éventuellement évaporer la couche de revêtement appliquée pour éliminer les solvants, et
3. durcir thermiquement la couche de revêtement.

13. Procédé selon la revendication 12, dans lequel la composition de revêtement est une composition de revêtement de finition transparent ou une composition de revêtement de finition en une seule étape pigmenté.

14. Utilisation de la composition de revêtement selon l'une quelconque des revendications 1 à 11 dans un procédé pour préparer un revêtement sur un substrat, comprenant les étapes :
1. d'application d'une couche de revêtement à partir de ladite composition de revêtement,
2. éventuellement d'évaporation de la couche de revêtement appliquée pour éliminer les solvants, et
3. de durcissement thermique de la couche de revêtement.

15. Utilisation selon la revendication 14, dans laquelle la composition de revêtement est une composition de revêtement de finition transparent ou une composition de revêtement de finition en une seule étape pigmenté.

16. Utilisation du procédé selon la revendication 12 ou 13 dans la peinture sur une ligne de production de véhicules et le refinissage de véhicules et de pièces de véhicules.

17. Utilisation de la composition de revêtement selon l'une quelconque des revendications 1 à 11 dans la peinture sur une ligne de production de véhicules et le refinissage de véhicules et de pièces de véhicules.
